# EUROPEAN PATENT SPECIFICATION

(11) **EP 2 950 620 B1**
(45) Date of publication and mention of the grant of the patent: **30.09.2020**
(21) Application number: 15167029.6
(22) Date of filing: 08.05.2015
(51) Int. Cl.: H05B 39/04

(54) **UNIVERSAL DIGITAL DIMMER**
UNIVERSELLER DIGITALER DIMMER
GRADATEUR NUMÉRIQUE UNIVERSEL

(30) Priority: 29.05.2014 CN 201410231534
(43) Date of publication of application: 02.12.2015
(73) Proprietor: Chao, Wen-Hsin, Changhua-Hsien (TW)
(72) Inventor: Chao, Wen-Hsin, Changhua-Hsien (TW)
(74) Representative: Lang, Christian

(56) References cited:
- EP-A2- 2 161 969
- WO-A1-2007/068040
- WO-A1-2009/036515
- WO-A1-2011/159813
- US-A1- 2005 275 354
- US-A1- 2012 246 650

## Description

### BACKGROUND OF THE INVENTION

### Fields of the invention

The present invention relates to a dimmer for brightness/speed control, especially to a universal digital dimmer for brightness/speed control and having a leading edge control mode and a trailing edge control mode.

### Descriptions of Related Art

Generally, a phase dimmer is connected to a load in series while in use. The operation of the phase dimmer is affected by load characteristics. There are various types of dimmers available now and each one is designed to be best suited to inductive load, capacitive load and resistive load respectively. The LED lights have become mainstream lighting products due to its advantages such as energy-saving, environmental protection etc. However, optimal dimming can't be achieved when the conventional phase-dimmer is used. This is due to the following factors: (1) change in the LED brightness corresponding to the dimming range input; (2) minimum load requirement for the dimmer; (3) an LED driver is needed for proper LED performance; there is noise/interference caused by the input capacitance and charging/discharging of the driver; (4) the load consumes energy in standby mode when the dimmer is in the off-state; (5) no load type is set in order to be applicable for all loads (inductive, capacitive, and resistive); (6) fast startup mode at low brightness level; (7) adjustment at the maximum brightness level and the minimum brightness level; and (8) reduction of insertion loss of the dimmer.

Thus there is room for improvement and a need to provide a universal digital dimmer that overcomes shortcomings of the techniques available now.

WO 2009/036515 A1 discusses dimmer circuits with leading and trailing edge detection. The document discloses the detection of the presence of an inductive load by letting a switching element have a faster turn-off rate in an initial period than a turn-off rate in a steady state period.

WO 2007/ 068040 A1 discloses a dimmer which begins each operation in a trailing edge mode and switches, upon detecting of an inductive load, to a leading edge mode.

### SUMMARY OF THE INVENTION

Therefore it is a primary object of the present invention to provide a dimmer that includes a zero level detector to have a leading edge control mode and a trailing edge control mode. The dimmer detects and gets suitable waveform by switching between the leading edge control mode and the trailing edge control mode. Moreover, detection and automatic dimming control are performed independently by the dual-core or multi-core microcontroller. One dual-core or multi-core central processing unit (CPU) of the dual-core or multi-core microcontroller is used for detection operation while the other/another dual-core or multi-core CPU thereof is used for control operation so as to achieve 0∼100% dimming range of the load. The dimmer is applicable to different loads and the brightness stability is improved.

In order to achieve the above object, the present invention provides a universal digital dimmer having the features of claim 1. Further embodiments are subject-matter of the dependent claims. The universal digital dimmer according to the invention includes a dual-core or multi-core microcontroller taken as a core and connected to a zero level detector, a leading/trailing edge automatic detector, an encoded signal generator, a no-load detection circuit, a power supply circuit, a state indicator and an output controller. The EMR control circuit is connected to an AC input. A rectifier circuit, a switch circuit, a low-power current amplifier and speed-up loop are disposed between the EMR control circuit and the output controller in turn so that the output controller provides the AC power required to the load. Moreover, partial current flows through the EMR control circuit to the power supply circuit so that the power supply circuit can provide the dual-core or multi-core microcontroller 5V direct current. The leading/trailing edge automatic detector automatically switches the control mode to a leading edge control mode or a trailing edge control mode while the zero level detector has the functionality of detecting waveform of the leading edge control mode and the trailing edge control mode. Thus the dimmer can work with inductive/capacitive/resistive load. Moreover, detection and automatic dimming/speed control are performed independently by the dual-core or multi-core microcontroller. One dual-core or multi-core CPU of the dual-core or multi-core microcontroller is used for detection operation while the other/another dual-core or multi-core CPU thereof is used for control operation. Thus 0∼100% dimming range of the load is achieved. Moreover, the dimmer works well with different loads and the brightness stability is improved.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a block diagram showing structure of a universal digital dimmer according to the present invention;
Fig. 2 is a circuit diagram of the universal digital dimmer according to the present invention;
Fig. 3 is a circuit diagram of an electromagnetic radiation (EMR) control circuit according to the present invention;
Fig. 4 is a circuit diagram of a zero level detector according to the present invention;
Fig. 5 is a waveform diagram showing output waveforms of a leading edge control mode and of a trailing edge control mode of an example according to the present invention;
Fig. 6 is a waveform diagram showing waveform at the zero-level point A in a trailing edge control mode of an example according to the present invention;
Fig. 7 is a waveform diagram showing waveform at the zero-level point A in a leading edge control mode of an example according to the present invention;
Fig. 8 is a waveform diagram of an embodiment connected to a resistive load in series according to an example the present invention;
Fig. 9 is a waveform diagram of a universal digital dimmer connected to a capacitive load in series according to the present invention;
Fig. 10 is a waveform diagram of a universal digital dimmer connected to an inductive load in series according to the present invention;
Fig. 11 is an exemplary waveform diagram showing an output waveform affected by load effect;
Fig. 12 is a circuit diagram of a switch circuit and a dual-core or multi-core microcontroller according to the present invention;
Fig. 13 is a waveform diagram showing a standard waveform of a trigger signal (waveform 5) and a waveform of an output signal (waveform 6) of an example according to the present invention;
Fig. 14 is a waveform diagram illustrating a waveform of the trigger signal (waveform 7) and a waveform with interference (waveform 8) of an example according to the present invention;
Fig. 15 is a brightness-versus-level graph according to the present invention.

### DETAILED DESCRIPTION OF THE PREFFERED EMBODIMENT

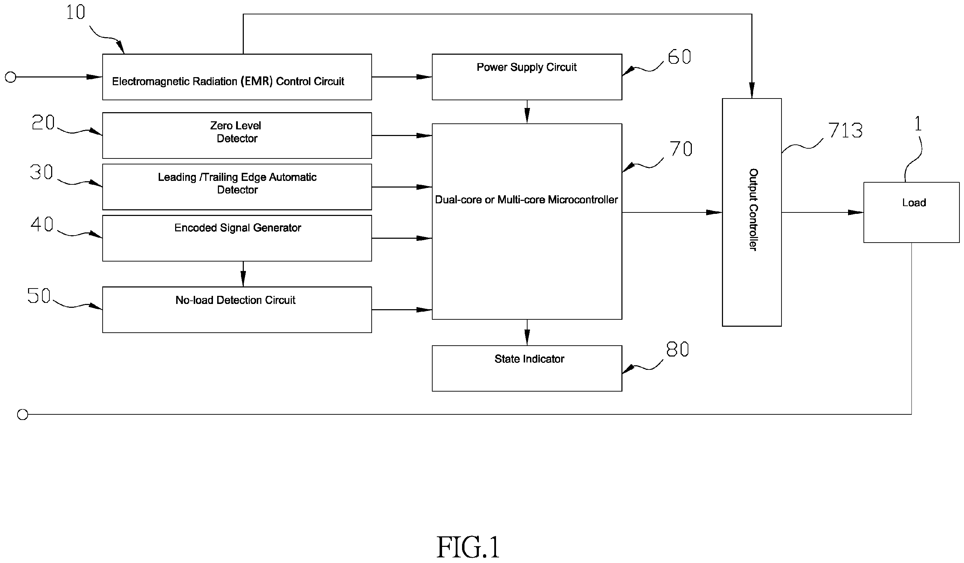

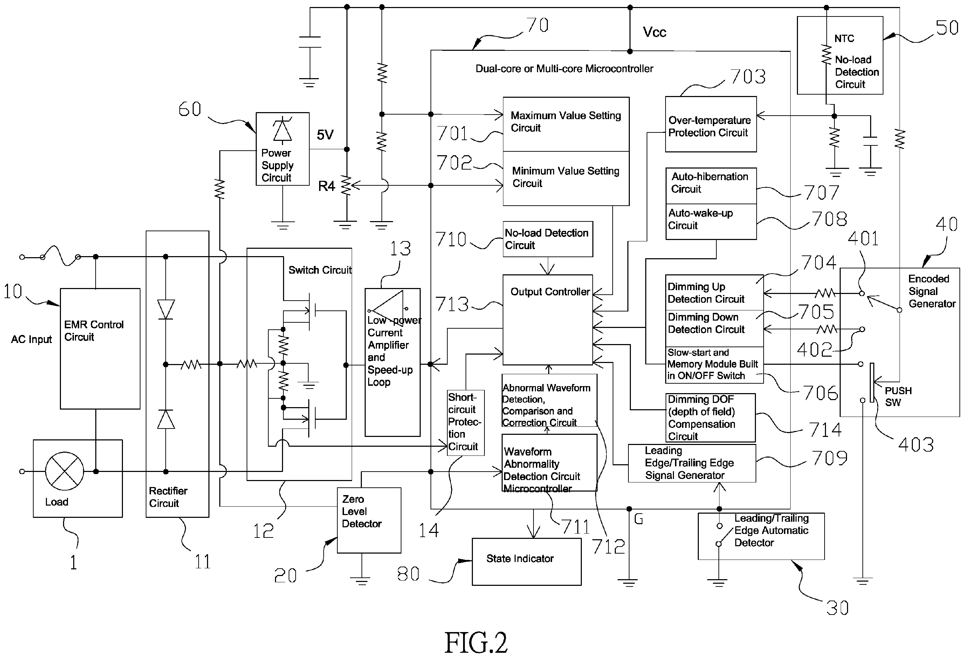

Refer to Fig. 1 and Fig. 2, an universal digital dimmer includes an electromagnetic radiation (EMR) control circuit 10, a zero level detector 20, a leading/trailing edge automatic detector 30, a encoded signal generator 40, a no-load detection circuit 50, a power supply circuit 60, a dual-core or multi-core microcontroller 70, a state indicator 80 and an output controller 713. The dual-core or multi-core microcontroller 70 is taken as a core and is connected to the zero level detector 20, the leading/trailing edge automatic detector 30, the encoded signal generator 40, the no-load detection circuit 50, the power supply circuit 60, the state indicator 80 and the output controller 713 respectively. The encoded signal generator 40 and the no-load detection circuit 50 are connected to each other. The EMR control circuit 10 is connected to an alternating current (AC) input at one end while the other end of the EMR control circuit 10 is connected to a rectifier circuit 11, a switch circuit 12, a low-power current amplifier and speed-up loop 13 and the output controller 713 in turn so that the output controller 713 can provide the AC power required to the load 1. The switch circuit 12 is further connected to a short-circuit protection circuit 14. One end of the short-circuit protection circuit 14 is to detect resistance in the switch circuit 12 while the other end thereof is connected to the output controller 713. Moreover, partial current flows through the EMR control circuit 10 to the power supply circuit 60 so that the power supply circuit 60 can provide 5V direct current to the dual-core or multi-core microcontroller 70. As to the leading/trailing edge automatic detector 30, it automatically switches the control mode to the leading edge control mode or the trailing edge control mode. The zero level detector 20 has the functionality of detecting waveform of the leading edge control mode and the trailing edge control mode so that the dimmer can work with inductive/capacitive/resistive load 1. Detection and automatic brightness/speed control are performed independently by respective dual-core or multi-core central processing unit (CPU) in the dual-core or multi-core microcontroller 70 so that the 0∼100% dimming/speed control range of the load 1 is achieved. The dimmer is suitable for various kinds of load 1 and the brightness stability is improved.

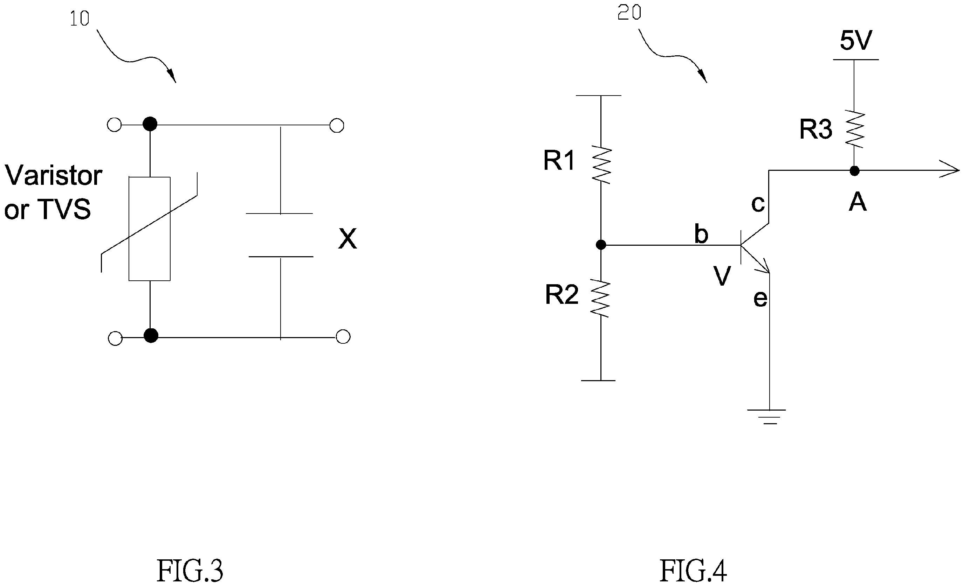

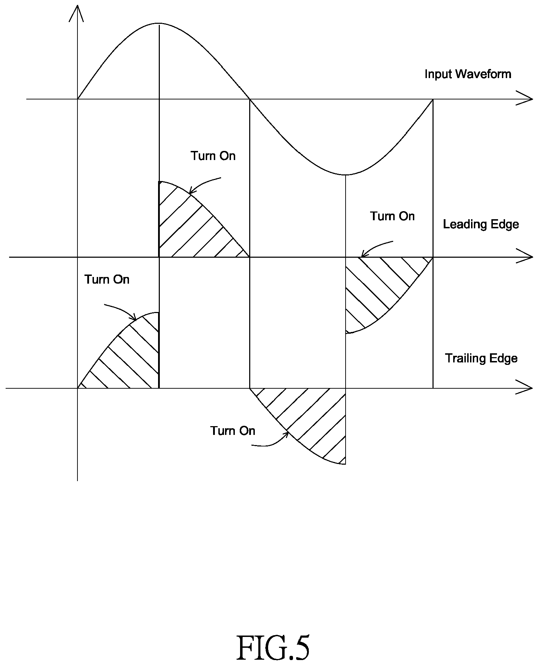

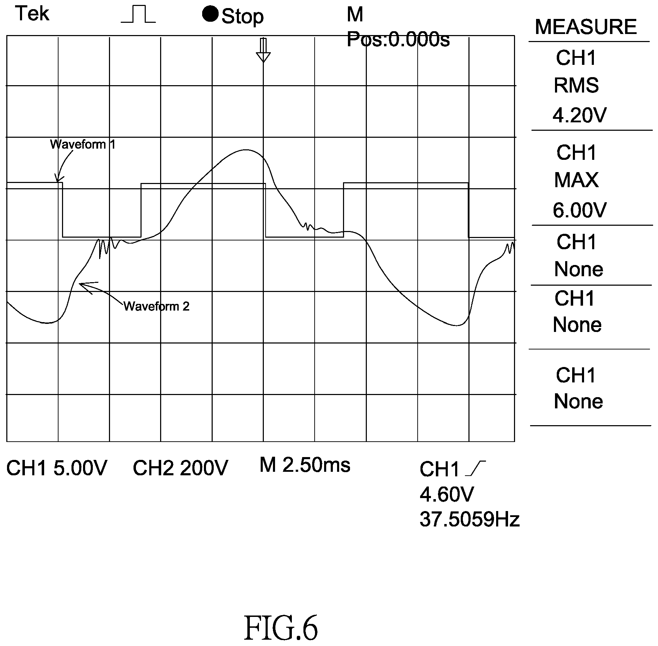

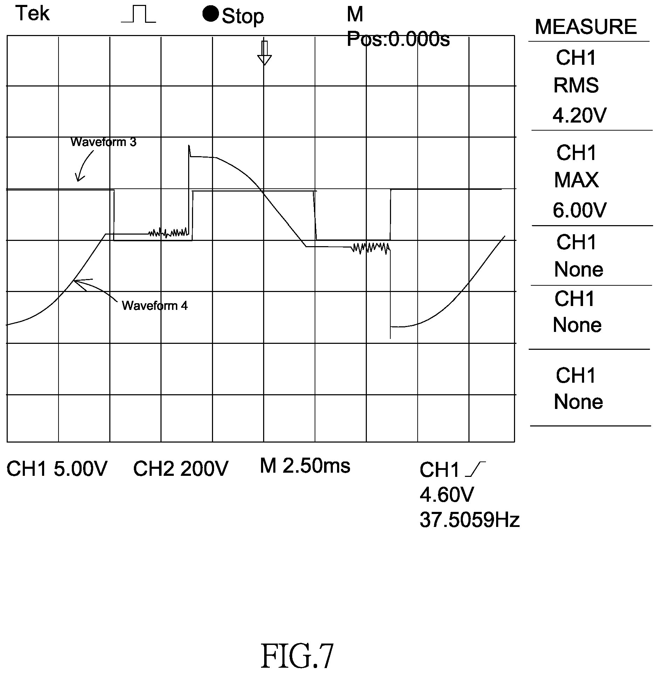

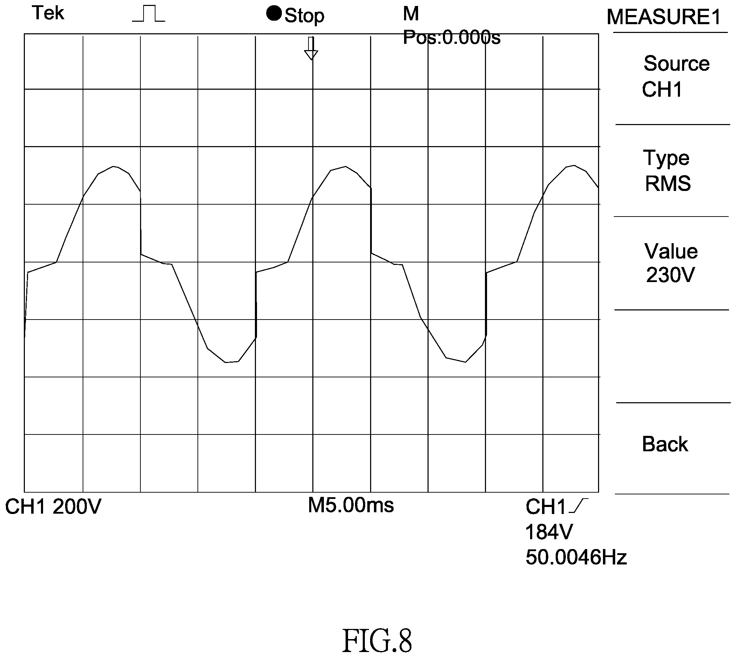

As shown in Fig. 1, Fig. 2 and Fig. 3, the EMR control circuit 10 consists of a noise harmonic suppression module and a high voltage impulse suppression module. The EMR control circuit 10 is further disposed with a X capacitor and a varisor/or transient voltage suppresser (TVS). The X capacitor is connected to the varisor/or TVS in parallel. The switching noise from the output controller 713 is suppressed by the EMR control circuit 10 so as to avoid interference to other equipment and protect the components in the dimmer free from outside interference. Also refer to Fig. 4 and Fig. 5, the zero level detector 20 composed of a power waveform detection circuit and a zero crossing detection circuit is used for waveform detection of the leading edge control mode or of the trailing edge control mode. The zero level detector 20 mainly includes resistance R1, R2, R3 and a NPN transistor V. The resistance R1 and the resistance R2 are connected to a base b of the transistor V in parallel while an emitter e of the transistor V is grounded and a collector c of the transistor V is connected to the resistance R3. The resistance R3 is connected to a 5V power source. The intersection of the collector c of the transistor V and the resistance R3 is the zero point A of the detected input waveform. When the trailing edge control mode is selected, a signal of the zero point of the input waveform detected by the zero level detector 20 is sent to the dual-core or multi-core microcontroller 70. The zero point is the point A in Fig. 4 and also refer to the waveform 1 in Fig. 6. As to the waveform 2 in Fig. 6, it is an action waveform. The trailing edge control mode is used because that the start point is at the zero point and there is no switching noise. The LED light is a capacitive load 1 and the charging voltage is increased at a low speed. Thus no noise is generated in the whole dimming system. Yet if the LED light is an inductive load 1 (such as the waveform in Fig. 8), the inductive load 1 will generate reverse voltage that damages the control component of the output controller 713 due to the flattened rising waveform and the steep off waveform in the trailing edge control mode. Thus a better performance is obtained while the leading edge control mode is selected. The signal of the point A in Fig. 4 is sent to the dual-core or multi-core microcontroller 70, with reference to the waveform 3 in Fig. 7. The waveform 4 in Fig. 7 is an action waveform.

Refer to Fig. 2, the dual-core or multi-core microcontroller 70 is composed of a maximum value/minimum value setting circuit 701/702, an over-temperature protection circuit 703, an dimming up/down detection circuit704/705, a slow-start and memory module built in ON/OFF switch 706, an auto-hibernation circuit 707, an auto-wake-up circuit 708, a leading edge/trailing edge signal generator 709, a no-load detection circuit 710, a waveform abnormality detection circuit microcontroller 711, and an abnormal waveform detection, comparison and correction circuit 712. One end of the maximum value/minimum value setting circuit 701/702 is connected to the power supply circuit 60 and an adjustable resistance R4 is set therebetween while the other end of the maximum value/minimum value setting circuit 701/702 is connected to the output controller 713. One end of the over-temperature protection circuit 703 is connected to the no-load detection circuit 50 while the other end thereof is connected to the output controller 713. One end of the up/down detection circuit704/705 and one end of the slow-start and memory module built in ON/OFF switch 706 are connected to the encoded signal generator 40 respectively while the other end of the up/down detection circuit 704/705 is connected to the output controller 713. The slow-start and memory module built in ON/OFF switch 706, the auto-hibernation circuit 707, the auto-wake-up circuit 708, the leading edge/trailing edge signal generator 709, and the no-load detection circuit 710 are all connected to the output controller 713. One end of the waveform abnormality detection circuit microcontroller 711 is connected to the zero level detector 20 while the other end thereof is connected to the abnormal waveform detection, comparison and correction circuit 712. The abnormal waveform detection, comparison and correction circuit 712 is connected to the output controller 713.

As shown in Fig 2, the maximum value/minimum value setting circuit 701/702 is used to set the maximum brightness/the minimum brightness. According to the minimum startup power of different load, the minimum load is set by the minimum value setting circuit 702. Thus the condition that the motor cannot rotate and noise and vibration are generated while the low load is triggered and started repeatedly can be avoided. The 0∼100% dimming range can be achieved. The maximum value setting circuit 701 is used to set the maximum load, reduce the insertion loss of the dimmer, increase the power factor (PF) and avoid the flickering. The dual-core or multi-core microcontroller 70 is further disposed with a dimming DOF (depth of field) compensation circuit 714 so as to extend the original minimum load 20∼40W to 3W required for startup. This is beneficial to the low load. As to the no-load detection circuit 710, it sends signals to the output controller 713 under control of an encoder to realize the function of no-load detection and over-temperature detection with auto recovery. The short-circuit protection circuit 14 provides the dimmer a short-circuit protection (SCP) interface. A user interface of the dimmer can show the leading edge/trailing edge state due to the leading edge/trailing edge signal generator 709 while the output controller 713 is to control output energy. The state indicator 80 shows the current state of the dimming/speed. The auto-hibernation circuit 707 makes the dimmer enter hibernation automatically within the setting time while the dimmer resumes from hibernation by the auto-wake-up circuit 708.

Still refer to Fig. 2, the encoded signal generator 40 includes a dimming-up switch 401, a dimming-down switch 402, and a push switch 403 used to control the on/off function. The dimming-up switch 401 is connected to the dimming up detection circuit 704 while the dimming-down switch 402 is connected to the dimming down detection circuit 705. The push switch 403 is connected to the slow-start and memory module built in ON/OFF switch 706. The ON/OFF function is performed through the encoded signal generator 40 and the last brightness level is stored in the encoded signal generator 40.

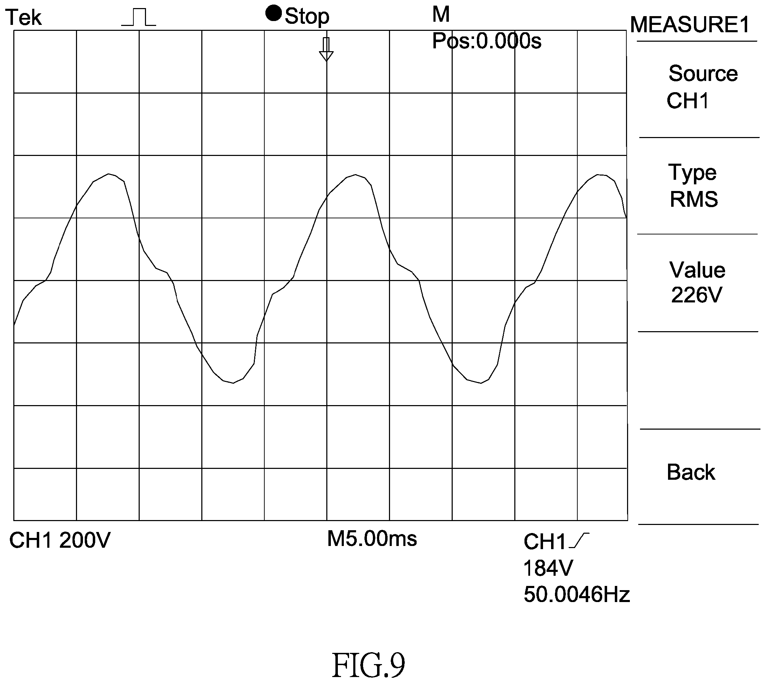

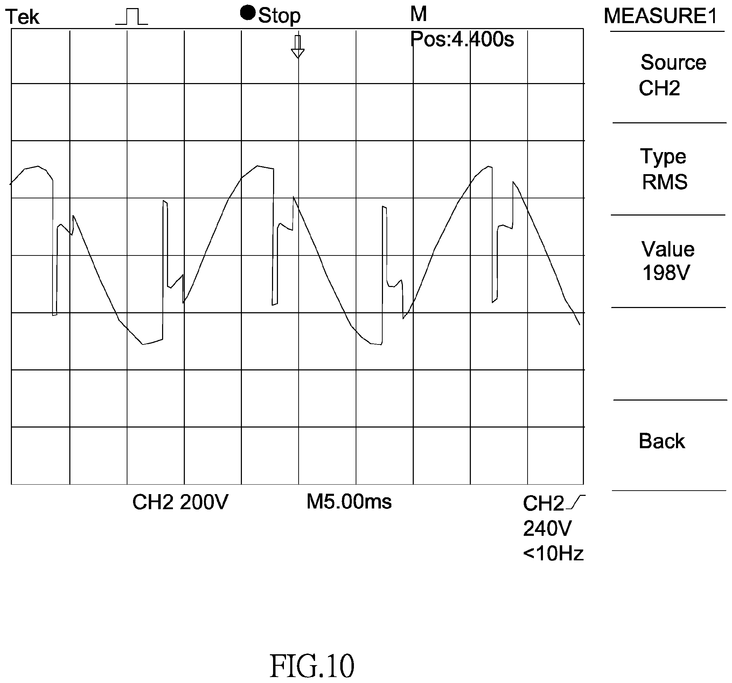

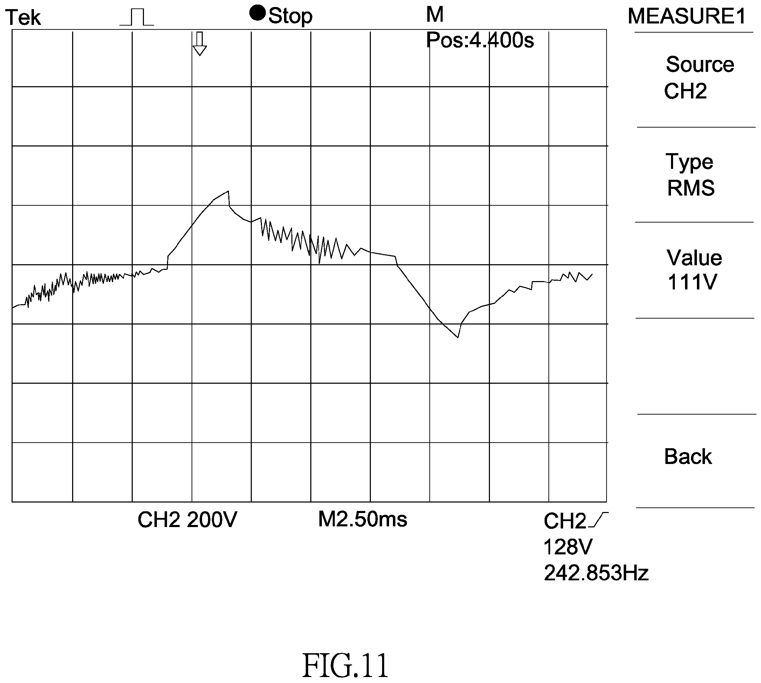

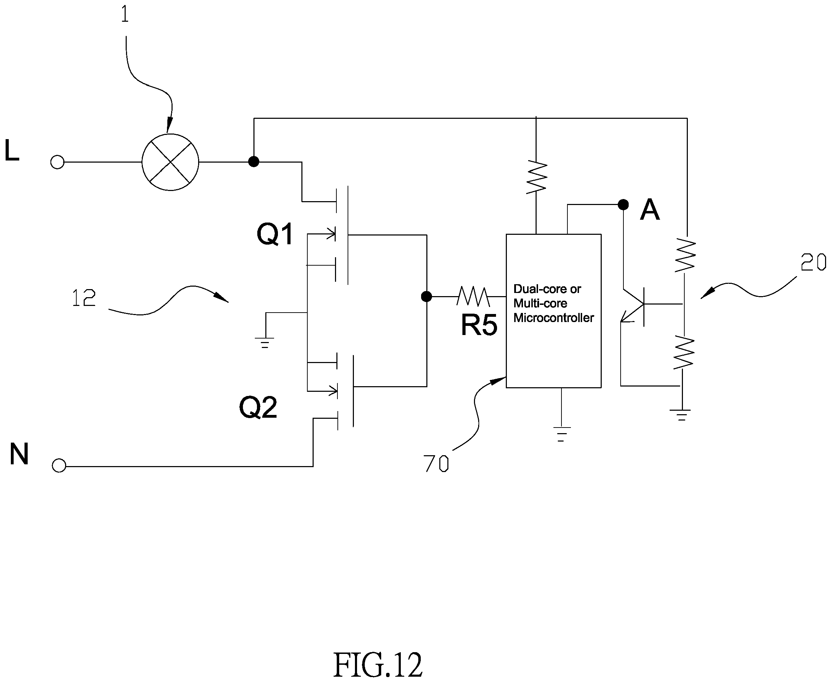

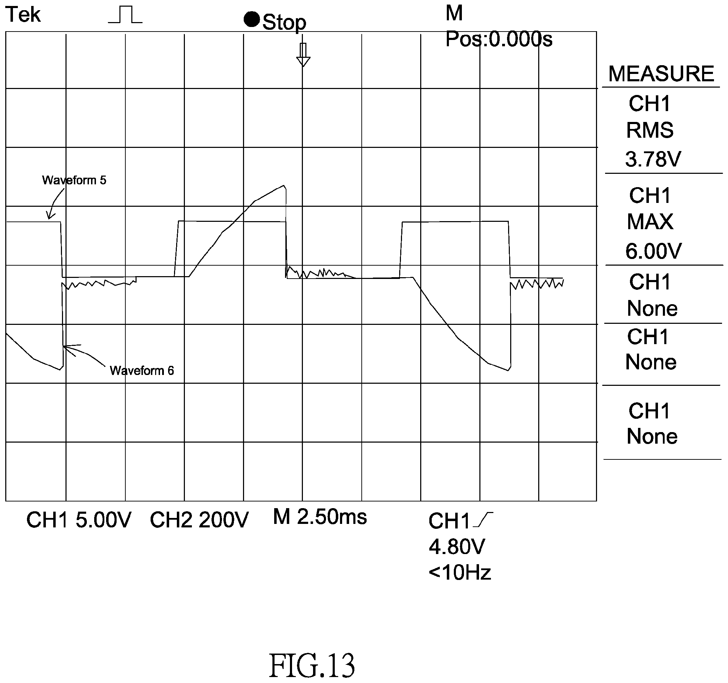

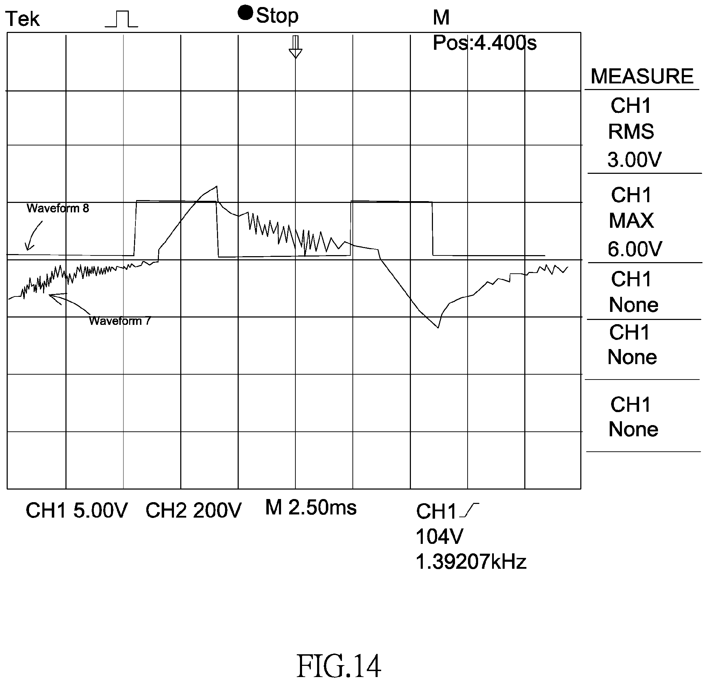

Back to Fig. 1, the leading/trailing edge automatic detector 30 is connected to the dual-core or multi-core microcontroller 70 and having the following functions: (1) selecting and setting the leading edge control mode and the trailing edge control mode; (2) setting the minimum brightness and the maximum brightness; (3) setting the temperature protection. The encoded signal generator 40 is used for providing a user interface of the dimmer while the power supply circuit 60 provides power to the dual-core or multi-core microcontroller 70 and the output controller 713. According to the load 1, the leading edge control mode or the trailing edge control mode is selected by the leading/trailing edge automatic detector 30 and the dimmer is switched to the leading edge or the trailing edge waveform. Thus the dimmer can work with different loads 1. The load 1 can be a capacitive load, an inductive load, or a resistive load that is selected from a halogen lamp, an electronic transformer, a compact fluorescent lamp ballast, a leading edge LED light, a trailing edge LED light, a fan speed controller etc. While in use, each different load 1 is connected to the dimmer in series and various waveforms are generated. For example, a waveform of the resistive load is shown in Fig. 8. A waveform of capacitive load is shown in Fig. 9. A waveform of inductive load is shown in Fig. 10. As to Fig. 11, it shows a waveform affected by load effect. The detection of the zero point A or charging/discharging of the load 1 will cause interference to the dimmer. Thus the LED is out of control and flickering. The dual-core or multi-core microcontroller 70 is used to compare the power waveform with the dimming waveform to get distortion therebetween for correction of the waveform distortion. Thus smooth dimming and no flicker are achieved. In order to increase the reliability of the circuit, the dual-core or multi-core microcontroller 70 is used for control in the present invention. As shown in Fig. 12, the dual-core or multi-core microcontroller 70 is connected to the switch circuit 12 while the switch circuit 12 is formed by metal oxide semiconductor field effect transistor (MOSFET) Q1 and Q2 connected to each other in series. A resistance R5 is used to connect the switch circuit 12 and the dual-core or multi-core microcontroller 70. When the MOSFET Q1 and the MOSFET Q2 are conducted, no signal is detected by the dual-core or multi-core microcontroller 70. Thus the prediction of how long a push signal is continuingly output is required at the next step before the MOSFET Q1 and the MOSFET Q2 are conducted. In each cycle, the frequency is corrected to 100HZ or 120HZ. The waveform distortion caused by load characteristics brings more loading to the detection and the operation. In the dual-core or multi-core microcontroller 70, one dual-core or multi-core central processing unit (CPU) is used for detection operation while the other/another dual-core or multi-core CPU is used for control operation. When the waveform has irregular changes and no trigger signal is detected, the preset waveform in the dual-core or multi-core microcontroller 70 is used as a baseline for correction. Especially when the load capacitance is charged at the first time instantaneous turn-on, the detection starts with a lag of hundreds of microseconds (µs) and this is beneficial to the signal detection. Refer to Fig. 13, it shows a standard waveform of the trigger signal (waveform 5) and a waveform of the output signal (waveform 6). Refer to Fig. 14, it shows a waveform of the trigger signal (waveform 7) and a waveform with interference (waveform 8). The output signal reacts with a lag of 1ms (milli-second) behind the trigger signal.

Back to Fig. 2, the rectifier circuit 11, the switch circuit 12, and the low-power current amplifier and speed-up loop 13 are disposed between the EMR control circuit 10 and the dual-core or multi-core microcontroller 70. First the noise and the impact of spike on the components are reduced by the noise harmonic suppression module and a high voltage impulse suppression module on the front end of the power so as to protect the circuit from faults and get the circuit to work well. The rectifier circuit 11 converts AC to direct current (DC) and provides DC to MOSFET Q1 and Q2 of the switch circuit 12 for switching on/off. Moreover, signals output from the dual-core or multi-core microcontroller 70 pass through the low-power current amplifier and speed-up loop 13 to drive the MOSFET Q1 and Q2. Once switching loss during on/off is reduced, the temperature rise of the active elements is reduced.

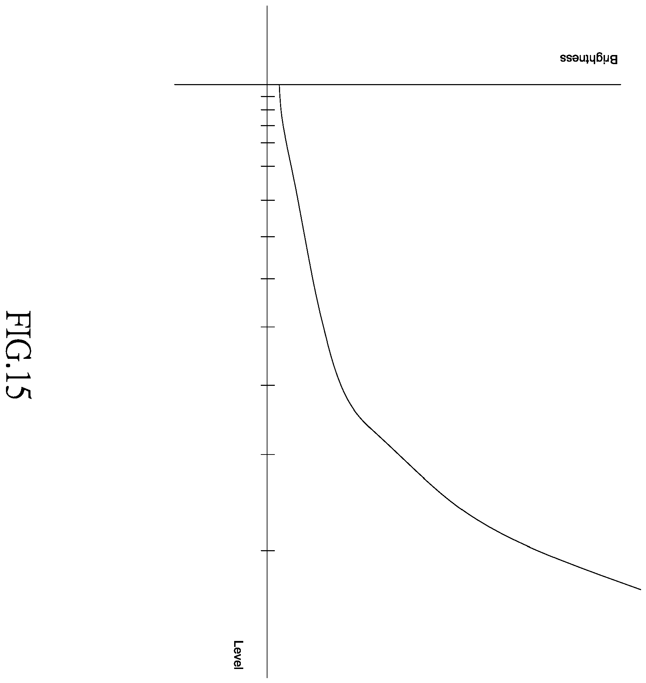

Back to Fig. 1, auto-correction of the maximum brightness and the minimum brightness is carried out at each time of on/off. When the dimmer is adjusted to the low brightness level, the frequency of a counter inside the dual-core or multi-core microcontroller 70 is lowered to reduce the energy consumed. The dual-core or multi-core microcontroller 70 enters the sleep mode while detecting the light is off and automatically turns back to the operation mode automatically when the encoded signal generator 40 acts. Due to low current consumption in the system in which the dimmer and the load 1 are connected in series, the insertion loss is reduced and the maximum brightness is achieved. Moreover, the dual-core or multi-core microcontroller 70 enters hibernation within 2 seconds when the circuit is off so as to reduce loss. When the circuit is on, a slow start is provided for protecting electronic components and the load from damages caused by rush current. The state indicator 80 shows the current state of the dimmer while the output controller 713 is for control of output energy. The no-load detection circuit 50 transfers signals to the dual-core or multi-core microcontroller 70 under control of the encoded signal generator 40. Refer to Fig. 15, the 0∼100% brightness range of the load 1 (LED light) is divided into various levels under control of pulse width modulation (PWM). There are more levels at the low brightness level while fewer levels are provided at the high brightness level so as to compensate for changes in brightness levels. The minimum brightness level is set in order to turn on different loads 1 synchronously. Moreover, the encoder is too sensitive when the on/off button is pressed and the speed control knob is rotated. In order to avoid such condition, the dimming function is set to be stopped when the on/off button is pressed. Once the on/off button is released, the dimming function is recovered and the light is dimmable by rotating the speed control knob. The dimmer includes the zero level detector to have the leading edge control mode and the trailing edge control mode. The dimmer detects and gets suitable waveform by switching between the leading edge control mode and the trailing edge control mode. Thus the dimmer can work well with different loads 1. Moreover, detection and automatic dimming control are performed independently by the dual-core or multi-core microcontroller 70 so as to achieve 0∼100% dimming range of the load 1. One dual-core or multi-core CPU of the dual-core or multi-core microcontroller 70 is used for detection operation while another dual-core or multi-core CPU is used for control operation. The dimmer is applicable to different loads 1 and the brightness stability is improved.

Additional advantages and modifications will readily occur to those skilled in the art. Therefore, the invention in its broader aspects is not limited to the specific details, and representative devices shown and described herein.

## Claims

1. A universal digital dimmer comprising: an electromagnetic radiation (EMR) control circuit (10), a zero level detector (20), a leading/trailing edge automatic detector (30), an encoded signal generator (40), a first no-load detection circuit (50), a power supply circuit (60), and a state indicator (80),
**characterized by**
further comprising a dual-core or multi-core microcontroller (70) for comparing a power waveform with a dimming waveform including an output controller (713), wherein the dual-core or multi-core microcontroller (70) is connected to the zero level detector (20), the leading/trailing edge automatic detector (30), the encoded signal generator (40), the first no-load detection circuit (50), the power supply circuit (60), the state indicator (80); wherein the EMR control circuit (10) is connected to an alternating current (AC) input; wherein the EMR control circuit (10) is connected to a rectifier circuit (11), a switch circuit (12), a low-power current amplifier and speed-up loop (13) and the output controller (713) in turn so that the output controller (713) provides a load AC power; wherein a partial current flows through the EMR control circuit to the power supply circuit (60) so that the power supply circuit (60) provides the dual-core or multi-core microcontroller 5V direct current; wherein the leading/trailing edge automatic detector (30) is configured to provide for automatic switching to activate a leading edge control mode or a trailing edge control mode, while the zero level detector (20) has a functionality of detecting a waveform of the input waveform in the leading edge control mode and the trailing edge control mode;
wherein the dual-core or multi-core microcontroller (70) includes a maximum value/minimum value setting circuit (701, 702), an over-temperature protection circuit (703), a dimming up/down detection
circuit (704, 705), a slow-start and memory module built in ON/OFF switch (706), an auto-hibernation circuit (707), an auto-wake-up circuit (708), a leading edge/trailing edge signal generator (709), a second no-load detection circuit (710), a waveform abnormality detection circuit microcontroller (711), and an abnormal waveform detection, comparison and correction circuit (712);
wherein one end of the maximum value/minimum value setting circuit (701, 702) is connected to the power supply circuit (60), while the other end of the maximum value/minimum value setting circuit (701, 702) is connected to the output controller (713), wherein the universal digital dimmer further comprises an adjustable resistance (R4), said adjustable resistance (R4) being connected between the power supply circuit (60) and the end of the maximum value/minimum value setting circuit (701, 702);
wherein one end of the over-temperature protection circuit (703) is connected to the first no-load detection circuit (50) while the other end thereof is connected to the output controller (713);
wherein one end of the dimming up/down detection circuit (704, 705) and one end of the slow-start and memory module built in ON/OFF switch (706) are connected to the encoded signal generator (40) respectively while the other end of the dimming up/down detection circuit (704, 705) is connected to the output controller (713);
wherein the slow-start and memory module built in ON/OFF switch (706), the auto-hibernation circuit (707), the auto-wake-up circuit (708), the leading edge/trailing edge signal generator (709), and the second no-load detection circuit (710) are connected to the output controller (713); one end of the waveform abnormality detection circuit microcontroller (711) being connected to the zero level detector (20) while the other end thereof being connected to the abnormal waveform detection, comparison and correction circuit (712); the abnormal waveform detection, comparison and correction circuit (712) being connected to the output controller (713); wherein one dual-core or multi-core central processing unit (CPU) of the dual-core or multi-core microcontroller (70) is used for detection, while the other/another dual-core or multi-core CPU thereof is used for automatic dimming control, so that detection and automatic dimming control are performed independently by the dual-core or multi-core microcontroller (70), wherein said detection includes waveform abnormality detection in said input waveform in the leading edge control mode or the trailing edge control mode with the zero level detector (20) detecting a signal of a zero point of the input waveform, wherein, when the input waveform has irregular changes and no trigger signal is detected, a preset waveform in the
dual-core or multi-core microcontroller (70) is used as a baseline for correction of a waveform distortion between the power waveform and the dimming waveform.

2. The universal digital dimmer as claimed in claim 1, wherein the encoded signal generator (40) includes a dimming-up switch (41), a dimming-down switch (42), and a push switch (43) with an on/off function; the dimming-up switch (41) is connected to the dimming up detection circuit (704) while the dimming-down switch (42) is connected to the dimming down detection circuit (705); the push switch (43) is connected to the slow-start and memory module built in ON/OFF switch (706); the on/off function is performed through the encoded signal generator (40) and last brightness level is stored in the encoded signal generator (40).

3. The universal digital dimmer as claimed in claim 1, wherein the EMR control circuit (10) includes a noise harmonic suppression module and a high voltage impulse suppression module; the EMR control circuit (10) is disposed with an X capacitor and a varisor/or transient voltage suppresser (TVS) and while the X capacitor is connected to the varisor/or TVS in parallel; switching noise from the output controller (713) is suppressed by the EMR control circuit (10) so as to avoid interference to other equipment and protect components in the dimmer free from interference.

4. The universal digital dimmer as claimed in claim 1, wherein the zero level detector (20) is having a power waveform detection circuit and a zero crossing detection circuit and used for waveform detection of the input waveform in the leading edge control mode or of the trailing edge control mode; the zero level detector (20) includes a first resistance (R1), a second resistance (R2), a third resistance (R3) and a NPN transistor (V); the first resistance (R1) and the second resistance (R2) are connected to a base (b) of the transistor (V) in parallel while an emitter (e) of the transistor (V) is grounded and a collector (c) of the transistor (V) is connected to the third resistance (R3); the third resistance (R3) is connected to a 5V power source; an intersection of the collector (c) of the transistor and the third resistance (R3) is the zero point (A) of input waveform detected.

5. The universal digital dimmer as claimed in claim 1, wherein the switch circuit (12) includes two metal oxide semiconductor field effect transistors (MOSFET) that are connected in series while a resistance (R5) is used to connect the switch circuit (129) and the dual-core or multi-core microcontroller (70).

6. The universal digital dimmer as claimed in claim 1, wherein the switch circuit (12) is connected to a short-circuit protection circuit (14); one end of the short-circuit protection circuit (14) is to detect resistance in the switch circuit (12) while the other end thereof is connected to the output controller (713).

7. The universal digital dimmer as claimed in claim 1, wherein the dual-core or multi-core microcontroller (70) is disposed with a dimming DOF (depth of field) compensation circuit (714) so as to extend an original minimum load 20∼40W to 3W for startup.

8. The universal digital dimmer as claimed in claim 1, wherein the encoded signal generator (40) and the first no-load detection circuit (50) are connected while the first no-load detection circuit (50) transfers signals to the dual-core or multi-core microcontroller (70) under control of the encoded signal generator (40).

## Patentansprüche

1. Universeller digitaler Dimmer, umfassend: einen Steuerkreis für elektromagnetische Strahlung (EMR) (10), einen Nullniveaudetektor (20), einen automatischen Vorder - / Rückflankendetektor (30), einen Generator eines kodierten Signals (40), eine erste Leerlauferkennungsschaltung (50), einen Stromversorgungskreis (60) und eine Zustandsanzeige (80), **dadurch gekennzeichnet, dass**
er ferner einen Zweikern - oder Mehrkern - Mikrocontroller (70) umfasst, um eine Leistungswellenform mit einer Dimmwellenform zu vergleichen, der einen Ausgangsregler (713) beinhaltet, wobei der Zweikern - oder Mehrkern - Mikrocontroller (70) mit dem Nullniveaudetektor (20), dem automatischen Vorder - / Rückflankendetektor (30), dem Generator eines kodierten Signals (40), der ersten Leerlauferkennungsschaltung (50), dem Stromversorgungskreis (60) und der Zustandsanzeige (80) verbunden ist, wobei der Steuerkreis für EMR (10) mit einem Wechselstrom - (AC) - Eingang verbunden ist, wobei der Steuerkreis für EMR (10) wiederum mit einer Gleichrichtereinheit (11), einem Schaltschaltkreis (12), einer Niedrig - Leistungs - Stromverstärker - und Beschleunigungsschleife (13) und dem Ausgangsregler (713) verbunden Ist, so dass der Ausgangsregler (713) eine Lastwechselstromleistung liefert, wobei ein Teilstrom durch den Steuerkreis für EMR zu dem Stromversorgungskreis (60) fließt, so dass der Stromversorgungskreis (60) den Zweikern - oder Mehrkern - Mikrocontroller mit 5V Gleichstrom versorgt, wobei der automatische Vorder - / Rückflankendetektor (30) darauf konfiguriert ist, eine automatische UmSchaltung bereitzustellen, um einen Vorderflankenkoritrollmodus oder einen Hinterflankenkontrollmodus zu aktivieren, wobei der Nullniveaudetektor (20) eine Funktionalität des Erkennens einer Wellenform der Eingangswellenform in dem Vorderflankenkontrollmodus und dem Hinterflankenkontrollmodus aufweist,
wobei der Zweikern - oder Mehrkern - Mikrocontroller (70) einen Schaltkreis zum Einstellen eines maximalen Werts/ eines minimalen Werts (701, 702) umfasst, eine Übertemperaturschutzschaltung (703), einen Schaltkreis zur Erkennung des Auf - / Abdimmens (704, 705), einen Ein-/Aus-Schalter (706) mit einem Langsam - Start - und Speichermodul, eine Auto - Hibernation - Schaltung (707), eine Auto - Aufweckschaltung (708), einen Vorderflanken - / Hinterflankensignalgenerator (709), eine zweite Leerlauferkennungsschaltung (710), einen Wellenformanomalienschaltkreismikrocontroller (711) und einen Wellenformanomalienerkennungs -, - vergleichs - und - korrekturschaltkreis (712),
wobei ein Ende des Schaltkreises zum Einstellen eines maximalen Werts / minimalen Werts (701, 702) mit dem Stromversorgungskreis (60) verbunden ist, während das andere Ende des Schaltkreises zum Einstellen eines maximalen Werts / eines minimalen Werts (701, 702) mit dem Ausgangsregler (713) verbunden ist, wobei der universelle digitale Dimmer ferner einen einstellbaren Widerstand (R4) umfasst, wobei der einstellbare Widerstand (R4) mit dem Strömversorgungskreis (60) und dem Ende des Schaltkreises zum Einstellen eines maximalen Werts / eines minimalen Werts (701, 702) verbunden ist,
wobei ein Ende der Übertemperaturschutzschaltung (703) mit der ersten Leerlauferkennungsschaltung (50) verbunden ist, während das andere Ende davon mit dem Ausgangsregler (713) verbunden ist,
wobei ein Ende des Schaltkreises zur Erkennung des Auf - / Abdimmens (704, 705) und ein Ende des Ein - /Aus - Schalters (706) mit einem Langsam - Start - und Speichermodul entsprechend mit dem Generator eines kodierten Signals (40) verbunden sind, während das andere Ende des Schaltkreises zur Erkennung des Auf - / Abdimmens (704, 705) mit dem Ausgangsregler (713) verbunden ist,
wobei der Ein - /Aus - Schalter (706) mit einem Langsam - Start - und Speichermodul, die Auto - Hibernation - Schaltung (707), die Auto - Aufweckschaltung (708), der Vorderflanken - / Hinterflankensignalgenerator (709), und die zweite Leerlauferkennungsschaltung (710) mit dem Ausgangsregler (713) verbunden sind,
wobei ein Ende des Wellenformanomalienerkennungsschaltkreismikrocontrollers (711) mit dem Nullniveaudetektor (20) verbunden ist, während das andere Ende davon mit dem Wellenformanomalienerkennungs - , - vergleichs - und - korrekturschaltkreis (712) verbunden ist, wobei der Wellenformanomalienerkennungs - , - vergleichs - und - korrekturschaltkreis (712) mit dem Ausgangsregler (713) verbunden ist, wobei eine Zweikern - oder Mehrkern - Zentraleinheit (CPU) des Zweikern - oder Mehrkern - Mikrocontrollers (70) zur Erkennung verwendet wird, während die andere / eine andere Zweikern- oder Mehrkern CPU davon für eine automatische Dimmsteuerung verwendet wird, so dass die Erkennung und automatische Dimmsteuerung unabhängig durch den Zweikern - oder Mehrkern - Mikrocontroller (70) ausgeführt werden, wobei die Erkennung die Erkennung von Wellenformanormalitäten in der Eingangswellenform in dem Vorderflankenkontrollmodus oder dem Hinterflankenkontrollmodus umfasst, wobei der Nullniveaudetektor (20) ein Signal eines Nullpunkts der Eingangswellenform feststellt, wobei, wenn die Eingangswellenform unregelmäßige Änderungen aufweist und kein Auslösesignal erkannt wird, eine voreingestellte Wellenform in dem Zweikern - oder Mehrkern - Mikrocontroller (70) zum Korrigieren einer Wellenformstörung zwischen der Leistungswellenform und der Dimmwellenform als eine Basislinie verwendet wird.

2. Universeller digitaler Dimmer gemäß Anspruch 1, bei welchem der Generator eines kodierten Signals (40) einen Schalter zum Aufdimmen (41), einen Schalter zum Abdimmen (42) und einen Druckschalter (43) mit einer Ein- / Aus - Funktion umfasst, wobei der Schalter zum Aufdimmen (41) mit dem Schaltkreises zur Erkennung des Aufdimmens (704) verbunden ist, während der Schalter zum Abdimmen (42) mit dem Schaltkreises zur Erkennung des Abdimmens (705) verbunden ist, wobei der Druckschalter (43) mit dem Ein - /Aus - Schalter (706) mit einem Langsam - Start - und Speichermodul verbunden ist, wobei die Ein - /Aus - Funktion durch den Generator eines kodierten Signals (40) durchgeführt wird und das letzte Helligkeitsniveau in dem Generator eines kodierten Signals (40) gespeichert wird.

3. Universeller digitaler Dimmer gemäß Anspruch 1, bei welchem der Steuerkreis für EMR (10) ein harmonisches Rauschunterdrückungsmodul und ein Hochspannungsimpulsunterdrückungsmodul umfasst, wobei der Steuerkreis für EMR (10) mit einer X-Kapazität und einem Varistor/oder transienten Spannungsunterdrücker (TVS) angeordnet ist und wobei die X-Kapazität mit dem Varistor / oder TVS parallel geschaltet ist, wobei Schaltgerausche von dem Ausgangsregler (713) durch den Steuerkreis für EMR (10) unterdrückt werden, um eine Beeinträchtigung für andere Geräte zu vermeiden und die Komponenten in dem Dimmer vor Beeinträchtigungen zu schützen.

4. Universeller digitaler Dimmer gemäß Anspruch 1, bei welchem der Nullniveaudetektor (20) eine Leistungswellenformerkennungsschaltung und eine Nulldurchgangserkennungsschaltung aufweist und für eine Wellenformerkennung der Eingangswellenform in dem Vorderflankenkontrollmodus oder dem Hinterflankenkontrollmodus verwendet wird, wobei der Nullniveaudetektor (20) einen ersten Widerstand (R1), einen zweiten Widerstand (R2), einen dritten Widerstand (R3) und einen NPN-Transistor (V) umfasst, wobei der erste Widerstand (R1) und der zweite Widerstand (R2) mit einer Basis (b) des Transistors (V) parallel geschaltet sind, während ein Emitter (e) des Transistors (V) geerdet ist und ein Kollektor (c) des Transistors (V) mit dem dritten Widerstand (R3) verbunden ist, wobei der dritte Widerstand (R3) mit einer 5V Stromquelle verbunden ist, wobei ein Schnittpunkt des Kollektors (c) des Transistors und des dritten Widerstands (R3) der Nullpunkt (A) der festgestellten Eingangswellenform ist.

5. Universeller digitaler Dimmer gemäß Anspruch 1, bei welchem der Schaltschaltkreis (12) zwei Metalloxid - Halbleiter - Feldeffekttransistoren (MOSFET) umfasst, die in Reihe geschaltet sind, wobei ein Widerstand (R5) verwendet wird, um den Schaltkreis (129) und den Zweikern - oder Mehrkern - Mikrocontroller (70) zu verbinden.

6. Universeller digitaler Dimmer gemäß Anspruch 1, bei welchem der Schaltschaltkreis (12) mit einer Kurzschlussschutzschaltung (14) verbunden ist, wobei ein Ende der Kurzschlussschutzschaltung (14) zum Erkennen des Widerstands in dem Schaltschaltkreis (12) dient, während das andere Ende davon mit dem Ausgangsregler (713) verbunden ist.

7. Universeller digitaler Dimmer gemäß Anspruch 1, bei welchem der Zweikern - oder Mehrkern - Mikrocontroller (70) mit einer Tiefenschärfe - (DOF) - Kompensationsschaltung zum Dimmen (714) angeordnet ist, um eine ursprüngliche Mindestlast 20 - 40 W auf 3 W für den Anfang zu verlängern.

8. Universeller digitaler Dimmer gemäß Anspruch 1, bei welchem der Generator eines kodierten Signals (40) und die erste Leerlauferkennungsschaltung (50) verbunden sind, wobei die erste Leerlauferkennungsschaltung (50) unter Steuerung des Generators eines kodierten Signals (40) Signale an den Zweikern - oder Mehrkern - Mikrocontroller (70) übermittelt.

## Revendications

1. Gradateur numérique universel comprenant: un circuit de commande de rayonnement électromagnétique (EMR) (10), un détecteur de niveau zéro (20), un détecteur automatique de bord d'attaque/de fuite (30), un générateur de signal codé (40), un premier circuit de détection d'absence de charge (50), un circuit d'alimentation électrique (60) et un indicateur d'état (80),
**caractérisé en ce**
**qu'**il comprend en outre un microcontrôleur double cœur ou multicœur (70) pour comparer une forme d'onde de puissance avec une forme d'onde de gradation de l'intensité lumineuse incluant une dispositif de commande de sortie (713), dans lequel le microcontrôleur double cœur ou multicœur (70) est relié au détecteur de niveau zéro (20), au détecteur automatique de bord d'attaque/de fuite (30), au générateur de signal codé (40), au premier circuit de détection d'absence de charge (50), au circuit d'alimentation électrique (60), à l'indicateur d'état (80); dans lequel le circuit de commande de rayonnement EMR (10) est relié à une entrée de courant alternatif (AC); dans lequel le circuit de commande de rayonnement EMR (10) est relié à un circuit de redressement (11), à un circuit de commutation (12), à un amplificateur de courant de faible puissance et à une boucle d'accélération (13) et au dispositif de commande de sortie (713) tout à tout de telle sorte que le dispositif de commande de sortie (713) fournisse une alimentation en courant alternatif de charge; dans lequel un courant partiel circule à travers le circuit de commande de rayonnement EMR jusqu'au circuit d'alimentation électrique (60) de telle sorte que le circuit d'alimentation électrique (60) fournisse au microcontrôleur double cœur ou multicœur le courant continu de 5 V; dans lequel le détecteur automatique de bord d'attaque/de fuite (30) est configuré pour fournir une commutation automatique pour activer un mode de commande de bord d'attaque ou un mode de commande de bord de fuite tandis que le détecteur de niveau zéro (20) présente une fonctionnalité de détection d'une forme d'onde de la forme d'onde d'entrée dans le mode de commande de bord d'attaque et le mode de commande de bord de fuite;
dans lequel le microcontrôleur double cœur ou multicœur (70) inclut un circuit de fixation de valeur maximale/valeur minimale (701, 702), un circuit de protection contre une température excessive (703), un circuit de détection d'augmentation/de baisse de la gradation de l'intensité lumineuse (704, 705), un module de démarrage lent et de mémoire intégré dans un interrupteur marche/arrêt (706), un circuit d'hibernation automatique (707), un circuit de réveil automatique (708), un générateur de signal de bord d'attaque/bord de fuite (709), un second circuit de détection d'absence de charge (710), un microcontrôleur de circuit de détection d'anomalie de forme d'onde (711) et un circuit de détection, de comparaison et de correction de forme d'onde anormale (712);
dans lequel une extrémité du circuit de fixation de valeur maximale/valeur minimale (701, 702) est reliée au circuit d'alimentation électrique (60) tandis que l'autre extrémité du circuit de fixation de valeur maximale/valeur minimale (701, 702) est reliée au dispositif de commande de sortie (713), dans lequel le gradateur numérique universel comprend en outre une résistance réglable (R4), ladite résistance réglable (R4) étant reliée entre le circuit d'alimentation électrique (60) et l'extrémité du circuit de fixation de valeur maximale/valeur minimale (701, 702);
dans lequel une extrémité du circuit de protection contre une température excessive (703) est reliée au premier circuit de détection d'absence de charge (50) tandis que l'autre extrémité de celui-ci est reliée au dispositif de commande de sortie (713);
dans lequel une extrémité du circuit de détection d'augmentation/de baisse de la gradation de l'intensité lumineuse (704, 705) et une extrémité du module de démarrage lent et de mémoire intégré dans un interrupteur marche/arrêt (706) sont reliées au générateur de signal codé (40) respectivement tandis que l'autre extrémité du circuit de détection d'augmentation/de baisse de la gradation de l'intensité lumineuse (704, 705) est reliée au dispositif de commande de sortie (713);
dans lequel le module de démarrage lent et de mémoire intégré dans un interrupteur marche/arrêt (706), le circuit d'hibernation automatique (707), le circuit de réveil automatique (708), le générateur de signal de bord d'attaque/bord de fuite (709) et le second circuit de détection d'absence de charge (710) sont reliés au dispositif de commande de sortie (713); une extrémité du microcontrôleur de circuit de détection d'anomalie de forme d'onde (711) étant reliée au détecteur de niveau zéro (20) tandis que l'autre extrémité de celui-ci étant reliée au circuit de détection, de comparaison et de correction de forme d'onde anormale (712); le circuit de détection, de comparaison et de correction de forme d'onde anormale (712) étant relié au dispositif de commande de sortie (713); dans lequel une unité centrale de traitement (CPU) double coeur ou multicœur du microcontrôleur double cœur ou multicœur (70) est utilisée pour une détection tandis que l'autre/une autre unité CPU double cœur ou multicœur est utilisée pour une commande automatique de gradation de l'intensité lumineuse de telle sorte qu'une détection et une commande automatique de gradation de l'intensité lumineuse soient réalisées de manière indépendante par le microcontrôleur double cœur ou multicœur (70), dans lequel ladite détection inclut une détection d'anomale de forme d'onde dans ladite forme d'onde d'entrée dans le mode de commande de bord d'attaque ou le mode de commande de bord de fuite avec le détecteur de niveau zéro (20) détectant un signal d'un point zéro de la forme d'onde d'entrée, dans lequel, lorsque la forme d'onde d'entrée présente des changements irréguliers et qu'aucun signal de déclenchement n'est détecté, une forme d'onde prédéfinie dans le microcontrôleur double cœur ou multicœur (70) est utilisée comme ligne de base pour une correction d'une distorsion de forme d'onde entre la forme d'onde de puissance et la forme d'onde de gradation de l'intensité lumineuse.

2. Gradateur numérique universel tel que revendiqué dans la revendication 1, dans lequel le générateur de signal codé (40) inclut un commutateur d'augmentation de la gradation de l'intensité lumineuse (41), un commutateur de baise de la gradation de l'intensité lumineuse (42) et un commutateur à bouton-poussoir (43) ayant une fonction de marche-arrêt; le commutateur d'augmentation de la gradation de l'intensité lumineuse (41) est relié au circuit de détection d'augmentation de la gradation de l'intensité lumineuse (704) tandis que le commutateur de baisse de la gradation de l'intensité lumineuse (42) est relié au circuit de détection de baisse de la gradation de l'intensité lumineuse (705); le commutateur à bouton-poussoir (43) est relié au module de démarrage lent et de mémoire intégré dans un interrupteur marche/arrêt (706) ; la fonction de marche/arrêt est exécutée au moyen du générateur de signal codé (40) et le niveau de luminosité est stocké dans le générateur de signal codé (40).

3. Gradateur numérique universel tel que revendiqué dans la revendication 1, dans lequel le circuit de commande de rayonnement EMR (10) inclut un module de suppression d'harmonique de bruit et un module de suppression d'impulsion de tension élevée ; le circuit de commande de rayonnement EMR (10) est disposé avec un condensateur X et un varistor ou un suppresseur de tension transitoire (TVS) et tandis que le condensateur X est raccordé au varistor ou au suppresseur TVS en parallèle, un bruit de commutation provenant du dispositif de commande de sortie (713) est supprimé par le circuit de commande de rayonnement EMR (10) de sorte à éviter une interférence avec un autre équipement et à protéger des composants dans le gradateur dépourvu d'interférence.

4. Gradateur numérique universel tel que revendiqué dans la revendication 1, dans lequel le détecteur de niveau zéro (20) comporte un circuit de détection de forme d'onde de puissance et un circuit de détection de passage par zéro et est utilisé pour une détection de forme d'onde de la forme d'onde d'entrée dans le mode de commande de bord d'attaque ou le mode de commande de bord de fuite ; le détecteur de niveau zéro (20) inclut une première résistance (R1), une deuxième résistance (R2), une troisième résistance (R3) et un transistor NPN (V) ; la première résistance (R1) et la deuxième résistance (R2) sont raccordées à une base (b) du transistor (V) en parallèle tandis qu'un émetteur (e) du transistor (V) est relié à la terre et un collecteur (c) du transistor (V) est relié à la troisième résistance (R3); la troisième résistance (R3) est reliée à une source d'énergie de 5 V; une Intersection du collecteur (c) du transistor et de la troisième résistance (R3) est le point zéro (A) de la forme d'onde d'entrée détectée.

5. Gradateur numérique universel tel que revendiqué dans la revendication 1, dans lequel le circuit de commutation (12) inclut deux transistors à effet de champ à semi-conducteur à oxyde métallique (MOSFET) qui sont raccordés en série tandis qu'une résistance (R5) est utilisée pour relier le circuit de commutation (129) et le microcontrôleur double cœur ou multicœur (70).

6. Gradateur numérique universel tel que revendiqué dans la revendication 1, dans lequel le circuit de commutation (12) est relié à un circuit de protection contre les courts-circuits (14) ; une extrémité du circuit de protection contre les courts-circuits (14) est destinée à détecter une résistance dans le circuit de commutation (12) tandis que l'autre extrémité de celui-ci est reliée au dispositif de commande de sortie (713).

7. Gradateur numérique universel tel que revendiqué dans la revendication 1, dans lequel le microcontrôleur double coeur ou multicœur (70) est pourvu d'un circuit de compensation de profondeur de champ (DOF) de gradation de l'intensité lumineuse (714) de sorte à étendre une charge minimale d'origine de 20∼40 W à 3 W pour une mise en marche.

8. Gradateur numérique universel tel que revendiqué dans la revendication 1, dans lequel le générateur de signal codé (40) et le premier circuit de détection d'absence de charge (50) sont reliés tandis que le premier circuit de détection d'absence de charge (50) transfère des signaux au microcontrôleur double cœur ou multicœur (70) sous le contrôle du générateur de signal codé (40).
